# EUROPEAN PATENT SPECIFICATION

(11) **EP 0 738 842 B1**
(45) Date of publication and mention of the grant of the patent: **10.10.2001**
(21) Application number: 96105878.1
(22) Date of filing: 15.04.1996
(51) Int. Cl.: F16H 45/02, F16F 15/123

(54) **Torque converter**
Drehmomentwandler
Convertisseur de couple

(30) Priority: 17.04.1995 JP 9120395
(43) Date of publication of application: 23.10.1996
(73) Proprietor: AISIN AW CO., LTD., Anjo-shi Aichi-ken (JP)
(72) Inventor: Maruki, Michio, Anjo-shi, Aichi-ken, 444-11 (JP); Taniguchi, Takao, Anjo-shi, Aichi-ken, 444-11 (JP); Shimazaki, Masataka, Anjo-shi, Aichi-ken, 444-11 (JP); Yokoyama, Fumitomo, Anjo-shi, Aichi-ken, 444-11 (JP); Kato, Hideji, Anjo-shi, Aichi-ken, 444-11 (JP); Oobayashi, Koji, Anjo-shi, Aichi-ken, 444-11 (JP); Watanabe, Yoshimi, Anjo-shi, Aichi-ken, 444-11 (JP); Momiyama, Naohisa, Anjo-shi, Aichi-ken, 444-11 (JP); Imakire, Masayoshi, Anjo-shi, Aichi-ken, 444-11 (JP)
(74) Representative: VOSSIUS & PARTNER

(56) References cited:
- EP-A- 0 001 889
- GB-A- 2 123 924
- US-A- 4 507 538
- US-A- 4 686 349
- US-A- 4 946 420
- US-A- 5 209 330

## Description

This invention relates to a torque converter.

An automatic transmission is conventionally equipped with a torque converter serving as a hydraulic transmission apparatus and has constitution transmitting engine's rotation taken out from a crankshaft to an input shaft of a transmission mechanism through the torque converter. The torque converter is constituted of a pump impeller, a turbine runner, a stator, a lockup clutch assembly, and a damper device. The rotation from the engine is transmitted to the pump impeller through a front cover, thereby rotating the turbine runner with hydraulic flow accompanied with the rotation of the pump impeller, and thereby transmitting the rotation of the turbine runner to the input shaft.

The lockup clutch assembly enters into an engaging status when the vehicle reaches a prescribed vehicle speed after starting driving, so that the engine rotation is transmitted to the input shaft without passing the innards of the torque converter. If the engine rotation is transmitted to the input shaft at the same time that the lockup clutch assembly enters in the engaging status, an abrupt change of the output torque of the engine is transmitted as it is and causes to generate vibrations, noises, and the like. A damper device is therefore disposed between the lockup clutch assembly and a turbine hub. Such a damper device is formed with springs placed at an outer circumferential portion of the lockup clutch piston and supported from the radially inner side of each drive plate. The drive plate pushes one end of the spring, whereas a driven plate pushes the other end. Accordingly, when the transmission torque is suddenly transmitted to the lockup clutch piston in conjunction with the engagement of the lockup clutch assembly, the springs become flexible and transmit the transmission torque to the input shaft while in a flexible status, as well as absorb the sudden change of the transmission torque.

Meanwhile, the lockup clutch piston and the springs are subject to repetitive sliding motions therebetween in conjunction with engagements and disengagements of the lockup clutch assembly. The surfaces of the clutch piston and the springs are therefore worn down. Friction members may be provided at the holder of the spring. Otherwise, the surface of the lockup clutch piston is hardened by a treatment such as carbonizing (or nitriding) hardening of the surface. The spring's holder with such friction members, however, not only increases the number of parts of the torque converter but also makes assembly work complicated. When the surface of the lockup clutch piston is hardened by the hardening method for the surface, such as carbonizing (or nitriding), a flat portion of the lockup clutch piston is prone to sustain strain greatly. The strain in the piston needs to be corrected, and therefore the assembly work becomes complicated.

One possible approach is to form the lockup clutch piston made of steel, to heat the lockup clutch piston at a hardening temperature (austenitic temperature) by hardening such as electron beam (EB) hardening and laser hardening to transform ferrite-pearlite phase thereof to austenite phase thereof, and then to form martensite phase by hardening through self-cooling. If a uniform austenite is tried to be obtained by hardening, however, it is required that the lockup clutch piston would be held during time for austenitic transformation, which is set corresponding to the hardening temperature. If the austenitic transformation time is long, the temperature of the lockup clutch piston is increased in a wide range due to heat transfer, thereby causing the lockup clutch piston to lose accuracy by being deformed and further causing occurrence of improper hardening due to insufficient self-cooling. As a result, the torque converter cannot smoothly engage and disengage the front cover with the lockup clutch piston thereof, thereby generating engaging and disengaging shocks.

GB-A-2 123 924 relates to a torque converter having a casing, a turbine, a pump and a stator, an input shaft coupled to the pump through the casing, an output shaft coupled to the turbine, a clutch plate slidably mounted on the turbine for frictional engagement with the casing, a plurality of circumferentially extending springs for coupling the clutch plate to the turbine, and a damper device. The damper device comprises a support on the clutch plate for contacting the outer periphery of the springs and holding the springs which abut the side of the clutch plate. End supports carried by the clutch plate engage the spring ends and are positioned between adjacent springs. Torque transmission members mounted on the turbine extend into the end supports, and engage the spring ends for transferring rotation of the turbine to the springs and thereby to the clutch plate, whereby torque fluctuations between the turbine and clutch plate are dampened by the springs.

It is an object of this invention to solve the problems on the conventional torque converter and to provide a torque converter capable of eliminating engaging and disengaging shock. This object is achieved with the features of claim 1. Accordingly, the torque converter includes a lockup clutch assembly disposed between a front cover and an output shaft, a lockup clutch piston operating the lockup clutch assembly, and a damper device disposed between the lockup clutch piston and the output shaft for absorbing change of transmission torque occurring in association with the operation of the lockup clutch assembly. The lockup clutch piston is made of steel and arranged with a thermally treated portion placed at a surface in contact with a spring of the damper device, and the thermally treated portion is hardened after locally melted. Since the temperature does not increase in a wide range of the piston and even around the thermally treated portion through heat transfer, the heat amount accumulated in the lockup clutch piston is reduced as that much, thereby improving the self-cooling effect for hardening, and preventing the lockup clutch piston from losing accuracy due to deformation. The improved self-cooling effect allows the thickness of the lockup clutch piston to be thinner with respect to the depth of hardened layer. Various plastic works such as riveting with plastic deformation can be implemented because portions except the thermally treated portion remain not so hard.

The thermally treated portion may be constituted of a first thermally treated region placed on a flat portion of the lockup clutch piston, and a second thermally treated region placed on a flange of the lockup clutch piston. Since the temperature does not increase in a wide range of the piston, the thermally treated regions do not thermally interfere with one another, nor cause tempering or annealing. The plural thermally treated regions can be simultaneously melted and hardened, so that such heat-treatment time can be shortened.

The lockup clutch piston may retain the spring by directly contacting the spring with the thermally treated portion located on the outmost circumference of the piston. The thermally treated portion can prevent the piston from being worn out due to sliding of the spring.

A drive plate of the damper device may be secured to the lockup clutch piston by riveting with plastic deformation and may retain the spring with the thermally treated portion. Riveting with plastic deformation can be implemented at any portion except the thermally treated portion because the temperature of the piston does not increase widely, so that the assembling work can be simplified as well as the cost and the number of parts can be reduced.

A friction member may be disposed on a surface of the lockup clutch piston in opposition to the front cover, and a thermally treated portion may be placed in proximity of the back side of the surface on which the friction member is formed. The friction member may have extremely flat surface because the piston's surface does not losing accuracy by deformation, thereby eliminating engaging or disengaging shock.

The above and other objects and features of the invention are apparent to those skilled in the art from the following preferred embodiments thereof when considered in conjunction with the accompanied drawings, in which:
Fig. 1 is a vertical cross section showing a torque converter according to a first embodiment of the invention;
Fig. 2 is a plan view showing the torque converter in Fig. 1;
Fig. 3 is a cross-sectional illustration showing a melting and hardening apparatus in the first embodiment;
Fig. 4 is a phase diagram showing a steel and carbon system;
Fig. 5 is a diagram for T.T.A. curve of carbon steel;
Fig. 6 is a diagram for T.T.T. curve of carbon steel;
Fig. 7 is a cross-sectional diagram showing thermally treated regions in the first embodiment;
Fig. 8 is an illustration showing a radiation of electron beam in the first embodiment;
Fig. 9 is a diagram showing steps for radiation of the electron beam in the first embodiment;
Fig. 10 is a diagram showing a deflection waveform in the first embodiment;
Fig. 11 is a diagram showing steps for radiation of the electron beam in a second embodiment of the invention;
Fig. 12 is a diagram showing a deflection waveform in the second embodiment; and
Fig. 13 is a cross-section showing the essential of a torque converter in a third embodiment of the invention.

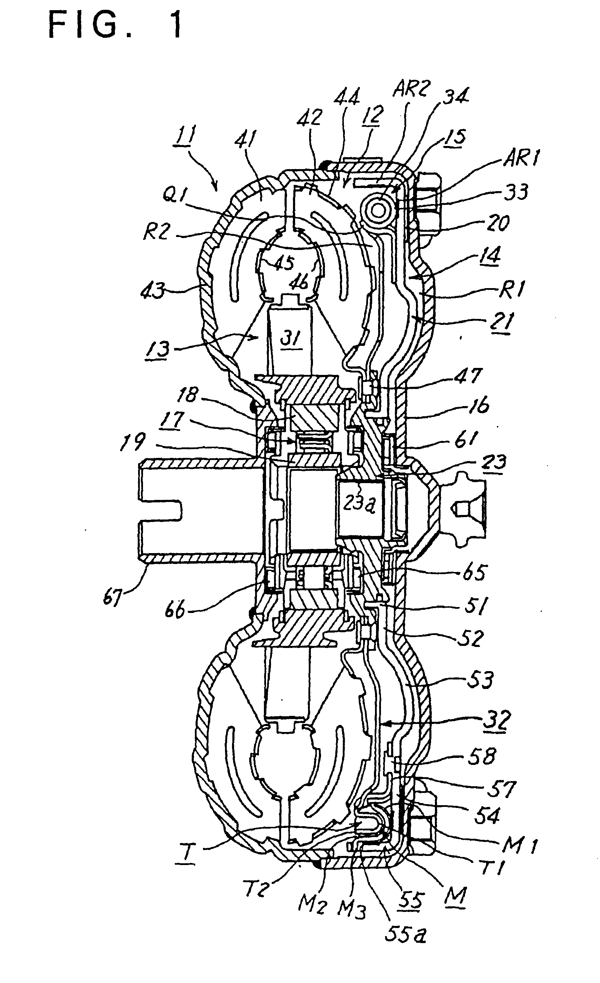

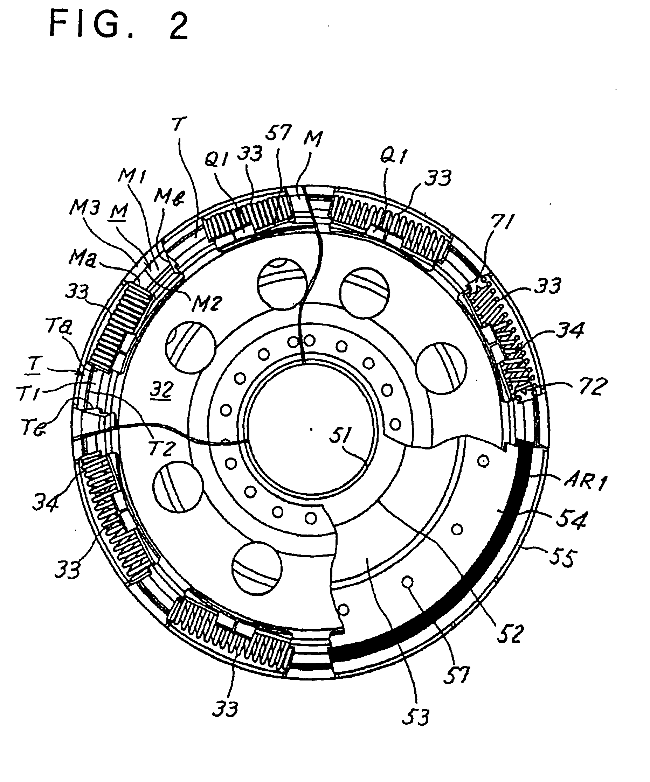

Referring to Figs. 1, 2, a torque converter 1 in the first embodiment of the invention is described. The torque converter is constituted of a pump impeller 11, a turbine runner 12 forming a torus with the pump impeller 11, a stator 13, a lockup clutch assembly 14, and a damper device 15. Rotation of the engine transmitted through a crankshaft, not shown, is transmitted to a front cover 16 and then to the pump impeller 11 fixed to the front cover 16. If the pump impeller 11 rotates, an oil in the torus rotates around an axis and circulates, in aid of centrifugal force, among the pump impeller 11, the turbine runner 12, and the stator 13.

When the pump impeller 11 just starts rotating and has a large rotary speed differential from the turbine runner 12, or in a case such that the vehicle starts driving, the oil flown out of the turbine runner 12 flows in a direction disturbing the rotation of the pump impeller 11. The stator 13 is therefore disposed between the pump impeller 11 and the turbine runner 12 and changes the oil flow in the direction facilitating the rotation of the pump impeller 11 when the rotary speed differential between the pump impeller 11 and the turbine runner 12 is large. If the turbine runner 12 comes to rotate with high speed and thereby the rotary speed differential between the turbine runner 12 and the pump impeller 11 becomes smaller, the oil pushing the front side of blades 31 pushes in turn the rear side of the blades 31, thereby disturbing the oil flow. An one-way clutch 17 rendering the stator 13 rotatable in a fixed direction is therefore disposed on a radially inner side of the stator 13. Accordingly, when the oil comes to push the rear side of the blades 31, the stator 13 naturally rotates, so that the oil can smoothly circulate. An outer race 18 of the one-way clutch 17 is secured to the stator 13; an inner race 19 of the one-way clutch 17 is secured to the casing of the automatic transmission, not shown. The torque converter thus amplifies the torque as operated as a torque converter when the rotary speed differential between the pump impeller 11 and the turbine runner 12 is large and is made to operate as a fluid coupling when the rotary speed differential is small.

A lockup clutch assembly 14 is described as follow. The lockup clutch assembly 14 enters in an engagement status when the vehicle reaches a prescribed speed after starting driving. Therefore, since the rotation of the engine is transmitted to the input shaft of the transmission mechanism without passing the innards of the torque converter, the mileage of the vehicle can be made better. The lockup clutch assembly 14 operates by switching oil supply in operative of a lockup relay valve, not shown. If traveling in the axial direction, the lockup clutch piston 21 engages with and disengages from the front cover 16. A releasing oil chamber R1 is disposed between the lockup clutch piston 21 and the front cover 16, whereas an engaging oil chamber R2 is disposed between the lockup clutch piston 21 and the turbine runner 12. If oil is fed to the releasing oil chamber R1, the lockup clutch assembly 14 enters in the disengagement status; if oil is fed to the engaging oil chamber R2, the lockup clutch assembly 14 enters in the engagement status. When the lockup clutch piston 21 engages with the front cover 16 via a friction member 20, the rotation of the crankshaft is directly transmitted to the input shaft, not shown, through the front cover 16, the lockup clutch piston 21, the damper device 15, and a turbine hub 23 serving as an output member. A spline 23a is formed on a radially inner surface of the turbine hub 23, thereby connecting the turbine hub 23 with the input shaft by the spline connection. The numeral 61 represents a thrust bearing disposed between the turbine hub 23 and the front cover 16; the numeral 65 represents a thrust bearing disposed between the stator 13 and the turbine hub; the numeral 66 represents a thrust bearing disposed between the stator 13 and a sleeve 67.

The damper device 15 is to absorb changes of the transmission torque occurring when the lockup clutch piston 21 and the front cover 16 are engaged with and disengaged from each other. The damper device 15 includes a drive plate 57 secured to the lockup clutch piston 21 by a rivet 58, as a projected part of the piston 21, whose head is hammered to rotate unitedly with the lockup clutch piston 21, a driven plate 32 disposed in the opposition to the drive plate 57 to rotate unitedly with the turbine runner 12, and springs 33, 34. The springs 33 are for a first stage arranged at eight positions in a circumferential direction of the lockup clutch piston 21; the springs 34 are for a second stage arranged at four positions in a circumferential direction of the lockup clutch piston 21; the springs 34 are placed inside every other spring 33. The spring 34 has a smaller diameter and is shorter than the spring 33; a helix angle of the spring 33 represents a predetermined set value; the spring 34 starts to be flexible after the transmission torque reaches the value of the bending point torque. Accordingly, though the rotation transmitted from the front cover 16 through the friction member 20 is transmitted to the turbine hub 23 through the damper device 15, the springs 33, 34 are at that time contracted, thereby absorbing changes of the transmission torque when rotation is transmitted. The springs 33, 34 can also suppress vibration and noise caused by a sudden change of the output torque of the engine to the transmission mechanism, not shown.

The pump impeller 11 and the turbine runner 12 are constituted of blades 41, 42, outer shells 43, 44, and inner shells 45, 46 disposed on both sides of the blades 41, 42, respectively. The outer shell 44 of the turbine runner 12 is connected to the turbine hub 23 through rivets 47 as well as the driven plate 32.

Meanwhile, the lockup clutch piston 21 is constituted of a first flange 51 extending in the axial direction slidable in the axial direction along a sliding surface formed on the turbine hub 23, a first flat plate portion 52 radially outwardly extending from the first flange 51, a curved portion 53 radially outwardly extending from the first flat plate portion 52, a second flat plate portion 54 radially outwardly extending from the curved portion 53, and a second flange 55 axially extending from the second flat plate portion 54. The curved portion 53 is projected from the first and second flat plate portions 52, 54 toward the engine; holders of the springs 33 are formed between the second flat plate portion 54 and the second flange 55. Since the springs 33 are placed at the outmost circumference of the lockup clutch piston 21, a space created between the front cover 16 and the torus can be sufficiently utilized, thereby enabling the diameter of the spring 33 to be designed at a large amount. Accordingly, the spring 33 can have a small spring constant, and as a result, eigenfrequency can be smaller.

To hold the springs 33, 34 by surrounding them as well as the lockup clutch piston 21, and to transmit the rotation of the lockup clutch piston 21 to the springs 33, 34, arcuate drive plates 57 are arranged at eight positions in the circumferential direction of the lockup clutch piston 21. The arcuate drive plates 57 are secured to the lockup clutch piston 21 by respective rivets 58 each head made of projected part of the piston is hammered, or plastically transformed. The drive plate 57 has curved portions Q1 axially extending so as to oppose the second flange 55 at both ends in the circumferential direction. A radially inner holder for each of the springs 33 is formed by the curved portion Q1. A spring pushing portion M for pushing the springs 33 when the lockup clutch piston 21 rotates in a normal direction (the counterclockwise direction in Fig. 2; hereinafter referred as to "during the normal drive.") while the lockup clutch assembly 14 is in the engagement status and in a reverse direction (the clockwise direction in Fig. 2; hereinafter referred as to "during the reverse drive.") while the engine brake is applied, is formed at the center of each drive plate 57. The spring pushing portion M pushes the end face of the springs 33 by a pushing face Ma during the normal drive and by a pushing face Mb during the reverse drive. The spring pushing portion M is constituted of a curved portion M1 extending along the end face of the spring 33, a riser portion M2 rising along the second flange 55, and an engagement portion M3 to engage an engagement groove 55a formed on the second flange 55.

The driven plate 32 extends radially along the turbine runner 12; an engagement portion T is formed corresponding to each spring 33. The engagement portion T holds the spring 33 during the normal and reverse drives of the lockup clutch piston 21. The engagement portion T pushes the spring 33 by a pushing face Ta during the normal drive and by a pushing face Tb during the reverse drive, respectively. The engagement portion T is disposed substantially parallel to the spring pushing portion M and includes a curved portion T1 extending substantially parallel to the curved portion M1 along the end face of the spring 33, and a riser portion T2 rising parallel to the riser portion M2 along the second flange 55.

It is to be noted that both end faces of the springs 33, 34 are subject to pushing by the spring pushing portion M and the engagement portion T and prone to be worn. Therefore, spring sheets 71, 72 are arranged on both ends of the springs 33, 34. The spring pushing portion M is formed with the curved portion M1, and the engagement portion T is formed with the curved portion T1, so that areas to contact the spring sheets 71, 72 are widened. Accordingly, the spring pushing portion M, the engagement portion T, and the spring sheets 71, 72 can improve wearing resistance. The spring 33 is, during the normal drive of the lockup clutch piston 21, pushed by the spring pushing portion M and held by the engagement portion T. As the spring 33 is contracted, a distance between the spring pushing portion M and the engagement portion T is shortened, and if the pushing face Ta of the engagement portion T hits the curved portion Q1, the contraction of the spring 33 is stopped. Thus, the curved portion Q1 serves as a stopper of the engagement portion T.

Meanwhile, since the springs 33 are made to be contracted during the normal and reverse drive of the lockup clutch piston 21, the second flat plate portion 54 and the spring 33 slide repetitively. To prevent the second flat plate portion 54 from being worn down due to sliding with the spring 33, an annular first thermally treated region AR1, as a part of a thermally treated portion, corresponding to the springs 33 is melt and hardened by high density energy radiation, for example, such as electron beam radiation (EB melting hardening). The springs 33 receive the centrifugal force accompanied with the rotation of the lockup clutch piston 21 and are pushed toward the second flange 55. During the normal and reverse drives of the lockup clutch piston 21, the second flange 55 and the spring 33 slide repetitively. To prevent the second flange 55 from being worn down due to sliding with the springs 33, an annular second thermally treated region AR2, as another part of the thermally treated portion, corresponding to the springs 33 is also melt and hardened.

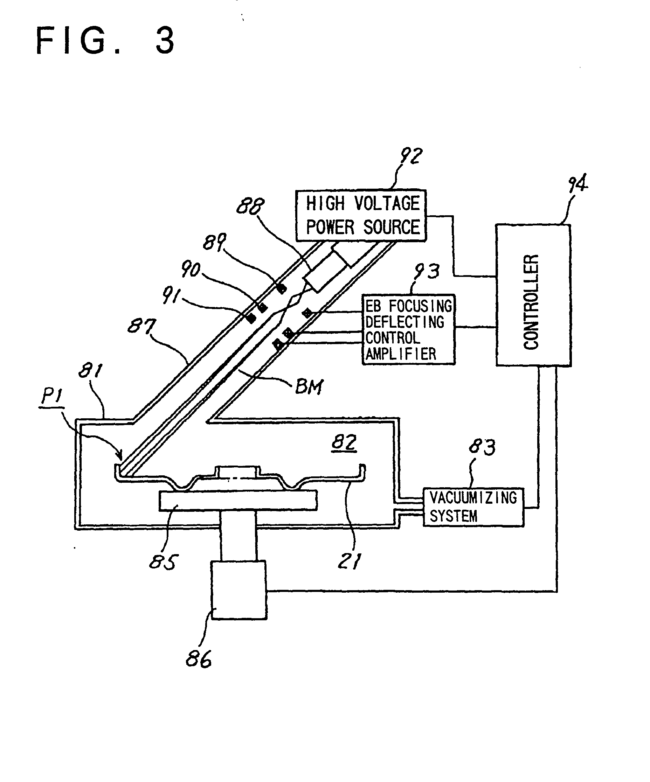

Referring to Fig. 3, a melting and hardening apparatus for melting and hardening is described as follows. The numeral 81 represents a vacuum working chamber casing having a sealing structure; the numeral 82 represents a vacuum working chamber surrounded by the vacuum working chamber casing; the numeral 83 is a vacuumizing system for forming vacuum in the vacuum working chamber 82. In the vacuum working chamber 82, a rotary table 85 is rotatably provided and rotated by a motor 86 formed outside the vacuum working chamber casing 81. A lockup up clutch piston 21 is put coaxially on the rotary table 85. A beam pipe 87 is connected to a certain position of the vacuum working chamber casing 81; an electron beam gun 88 is attached to one end of the beam pipe 87. A first focusing lens 89 for focusing electron beam BM generated at the electron beam gun 88 is formed on an downstream side of the electron beam gun 88; a second focusing lens 90 for further focusing the electron beam BM is formed on a downstream side of the first focusing lens; a deflection lens 91 for changing a radiation point by deflecting the electron beam BM is formed on a downstream side of the second focusing lens 90. A high voltage power source 92 is connected to the electron beam gun 88; the first and second focusing lens 89, 90 and the deflecting lens 91 are connected to an EB focusing deflecting control amplifier 93; a controller 94 is provided to be able to control the vacuumizing system 83, the high voltage power source 92, and the EB focusing deflecting control amplifier 93.

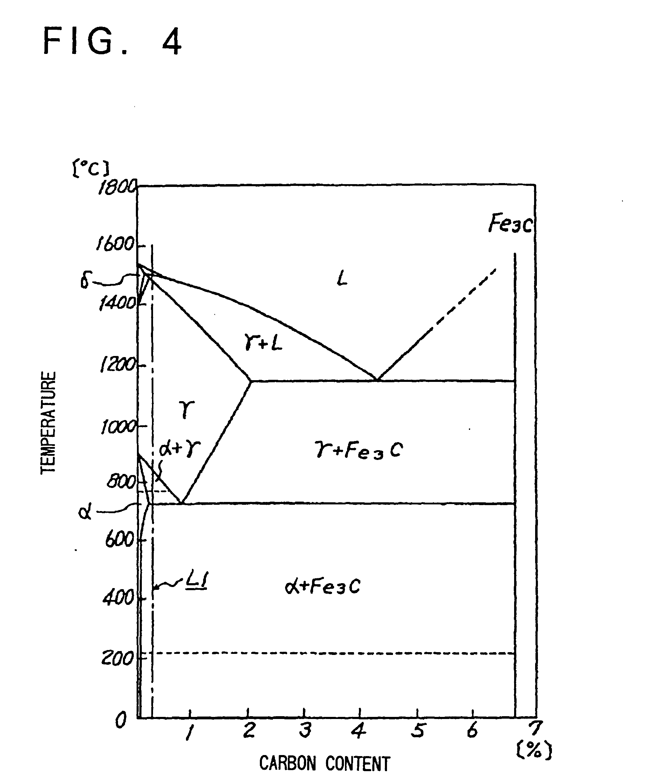

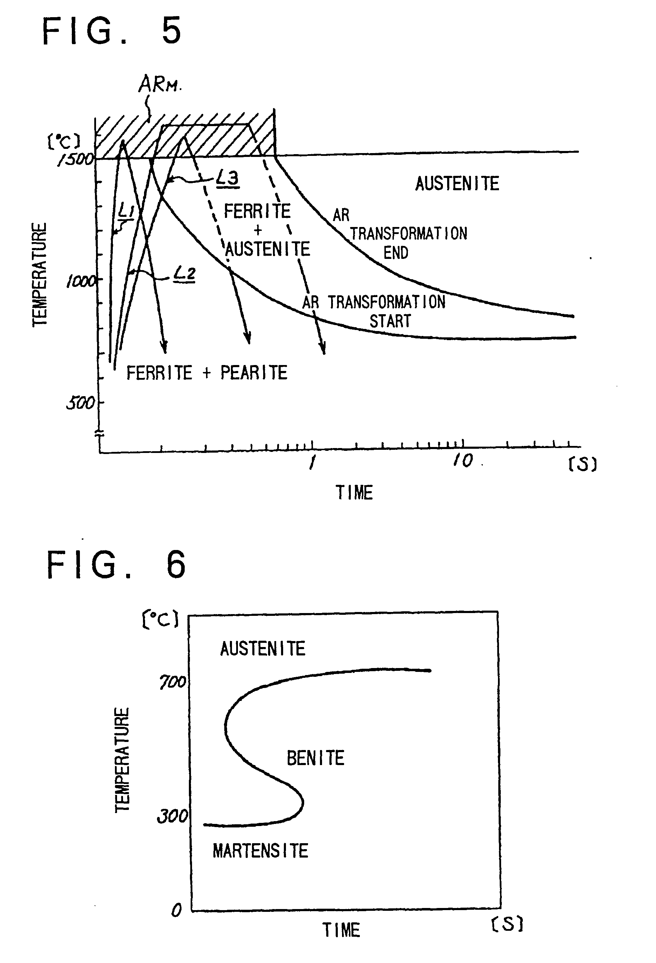

A melting and hardening method is described as follows with reference to Figs. 4 to 6. It is to be noted that in Fig. 4, the abscissa indicates carbon content; the ordinate indicates temperature; "α" is a zone for pearlite; "γ" is a zone for austenite; "L" is a zone for melting phase; "L1" indicates a line for organization change by melting hardening. In Figs. 5, 6, the abscissa indicates time, and the ordinate indicates temperature.

In this embodiment, the lockup clutch piston 21 as a member to be thermally treated (see, Fig. 3) is made of steel, for example, carbon steel with low carbon content (low carbon steel); the thermally treated portion P1 of the lockup clutch piston 21 is heated at a melting temperature of 1500 °C or above to be melted and then hardened by self-cooling. The organization of the thermally treated portion P1 is changed along Line L1 at that time; ferrite-pearlite is heated to be melted and becomes a melting body, which becomes austenite when solidified. After becoming austenite, the steel becomes martensite by hardening through self-cooling. Accordingly, the surface hardness of the thermally treated portion P1 is increased, thereby improving the wearing resistance.

When the regular EB hardening is conducted on the thermally treated portion, as apparent from Fig. 5, austenitic transformation time for making the organization of the thermally treated portion P1 austenite comes to be shorter as the heating temperature is higher. When the thermally treated portion P1 is subject to melting and hardening of this invention, the material in the thermally treated portion P1 is heated at a temperature of 1500°C or above for period within a finishing time of carbon steel's austenitic transformation at a temperature immediately below a melting point thereof. Accordingly, the organization of the thermally treated portion P1 can immediately be transformed to be austenitic. That is, in Fig. 5, the material of the thermally treated portion P1 is heated and melted as in zone ARM indicated by hatching, and then immediately subject to hardening through self-cooling. Any method of melting of 0.05 second as shown by Line L1 and then hardening, melting of 0.5 second as shown by Line L3 and then hardening, or melting of 1 second and then hardening after the melting state is maintained for a certain time, can be performed. It is to be noted that in this invention, melting is conducted within, for example, 0.05 second, a bit of time, and then hardening is conducted.

Since temperature around the thermally treated portion P1 can thus be kept away from increasing due to heat transfer, the heat amount accumulated in the lockup clutch piston 21 is reduced as that much, thereby effectuating self-cooling well. Consequently, the lockup clutch piston 21 can have a thinner thickness in comparison with the depth of the hardened layer. For example, the lockup clutch piston 21 may have a thin thickness, such as of about a half of limited thickness for regular EB hardening. Since the thermally treated portion P1 of the lockup clutch piston 21 can be cooled within a bit of time at the temperature starting martensitic transformation or below, no organization of bainite or the like can be formed in the thermally treated portion P1. Consequently, no defective hardening occurs. Since the hardened layer can be shallower, the surface of the thermally treated portion P1 can be free from corrugating. Moreover, since the material of the thermally treated portion P1 is solidified after melted once, the surface roughness of the thermally treated portion P1 can be improved. Since the temperature does not increase in a wide range of the lockup clutch piston 21 due to heat transfer, the lockup clutch piston 21 can be prevented from losing accuracy by deformation. For example, since the face of the lockup clutch piston 21 located on a side of the front cover 16 can be prevented from losing accuracy by deformation, the friction member 20 can maintain the extremely flat surface thereof. The lockup clutch assembly 14 can therefore be engaged smoothly. Moreover, the carbon content in the steel making the piston 21 is extremely small, so that martensitic organization of a lesser amount may be formed after melting and hardening. The coefficient of thermal expansion of the lockup clutch piston 21 can as a result be made smaller, thereby preventing crack from occurring during hardening. The portions except the thermally treated portion P1 do not become hard, so that various plastic working such as riveting with plastic deformation can be readily implemented against the lockup clutch piston 21. In this embodiment, riveting with a rivet 58, as a projected portion of the piston 21, whose head is hammered can be conducted against the lockup clutch piston 21. Therefore, riveting can be done without using a separate rivet, so that the work can be simplified, as well as the cost can be reduced.

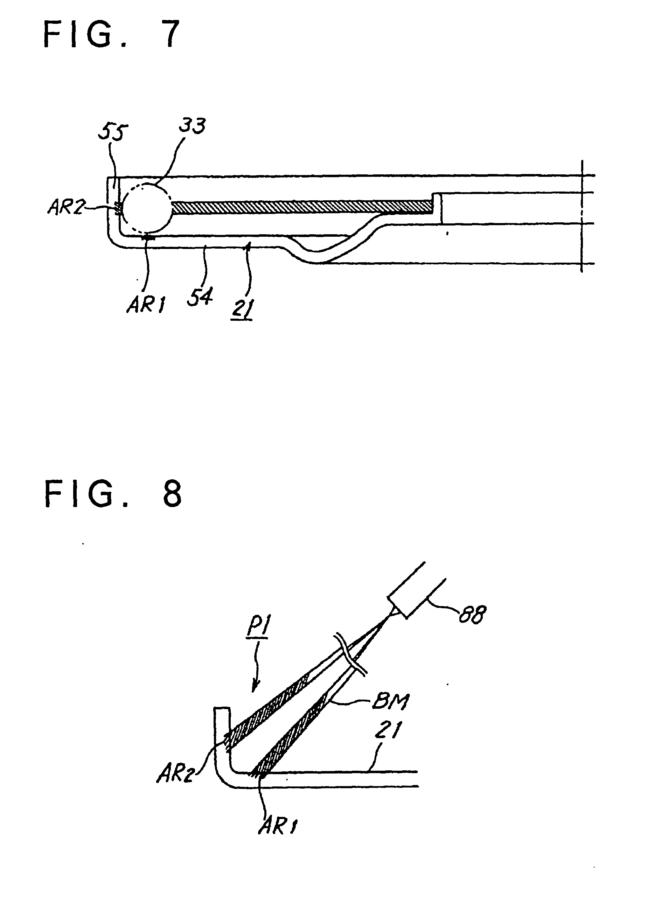

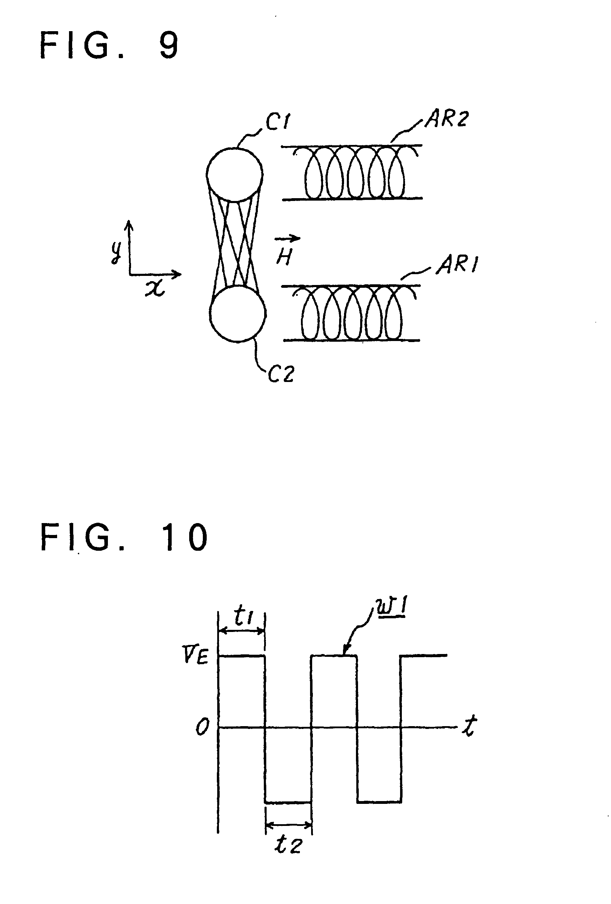

Referring to Figs. 7 to 10, the melting and hardening process in use of the electron beam EB is described in detail. In Fig. 10, the abscissa indicates time, and the ordinate indicates voltage VE of the deflection waveform. In the melting and hardening process, the electron beam BM generated at the electron beam gun 88 (see, Fig. 3) is radiated to the thermally treated portion P1 on the lockup clutch piston 21. In this situation, the electron beam BM can be deflected by the deflection lens 91, and the radiated points can be arbitrarily changed, so that plural places can be treated at one time.

In Fig. 7, the numeral 21 represents a lockup clutch piston; the numeral 33 represents a spring; the numeral 54 represents a second flat plate on which a first thermally treated region AR1 is set; the numeral 55 represents a second flange on which a second thermally treated region AR2 is set. Those thermally treated regions AR1, AR2 are set on the entire circumference of the lockup clutch piston 21. As shown in Fig. 8, the electron beam BM from the electron beam gun 88 can melt and harden at the same time the thermally treated regions AR1, AR2 by radiating the electron beam BM alternatively on the thermally treated regions AR1, AR2 by deflecting the electron beam BM using the deflecting lens 91. Therefore, as shown in Fig. 9, the electron beam BM is radiated along two circular deflected traces C1, C2. The thermally treated regions AR1, AR2 are radiated with the electron beam BM through the circular deflected traces C1, C2, respectively, and during this, the rotary table 85 is rotated. The traces of the electron beam BM therefore travels in Arrow H direction in the thermally treated regions AR1, AR2. The respective circular deflected traces C1, C2 are formed by combining deflections where sinusoidal deflection waveforms in x-axial and y-axial directions are generated. To radiate the electron beam BM alternatively on the thermally treated regions AR1, AR2 by switching the circular deflected traces C1, C2, a deflection waveform W1 as shown in Fig. 10 is generated and superimposed on the deflection waveforms in y-axial direction. The electron beam BM is radiated on the thermally treated region AR1 during time t1 that the voltage VE is a plus value and on the thermally treated region AR2 during time t2 that the voltage VE is a minus value.

Since the temperature does not increase in a wide range of the lockup clutch piston 21 due to heat transfer, there is no thermal interference between the thermally treated region AR1, AR2, and therefore, tempering, annealing and the like will not occur. Furthermore, the electron beam BM melts and hardens the thermally treated regions AR1, AR2 at the same time, so that thermal treating time can be reduced. While the second flange 55 needs high wearing resistance because of exertion of centrifugal force of the springs 33, the second flat plate portion 54, contrarily, does not need high wearing resistance as much as that of the second flange 55 because of no exertion of centrifugal force of the springs 33. By setting the time t1 of the deflection waveform w1 shorter and the time t2 of the deflection waveform w2 longer, the thermally treated region AR1 is softer than the thermally treated region AR2. The energy consumption for melting and hardening can be reduced, as well as the working time can be reduced.

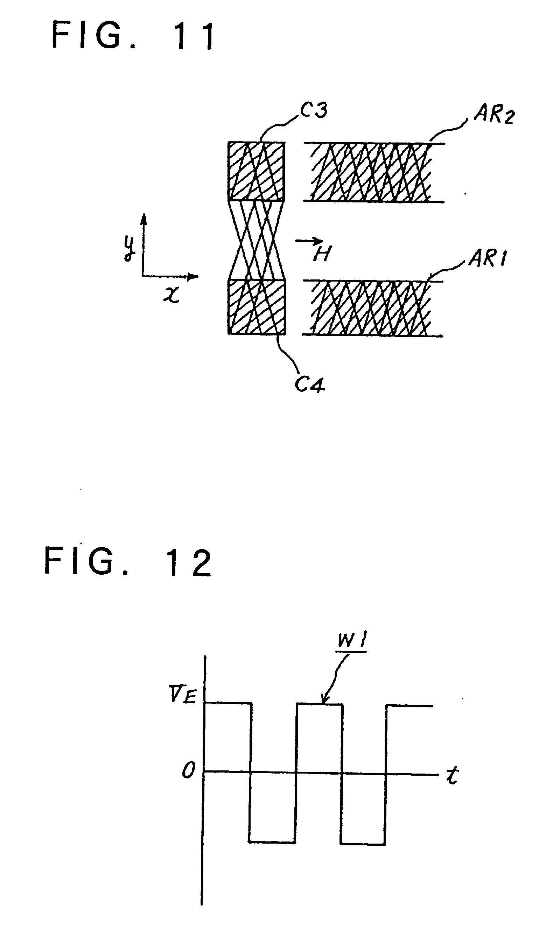

Next, a second embodiment of the invention is described. It is to be noted that the abscissa indicates time, and the ordinate indicates voltage VE of the deflection waveform in Fig. 12. As shown in Fig. 11, the electron beam BM (see, Fig. 8) is radiated along two facial deflected traces C3, C4. The thermally treated regions AR1, AR2 are radiated with the electron beam BM through the facial deflected traces C3, C4, respectively, and during this, the rotary table 85 is rotated. The traces of the electron beam BM therefore travels in Arrow H direction in the thermally treated regions AR1, AR2. The respective facial deflected traces C3, C4 are formed by generating serrate deflection waveforms in x-axial and y-axial directions. To radiate the electron beam BM alternatively on the thermally treated regions AR1, AR2 by switching the facial deflected traces C3, C4, a deflection waveform W1 as shown in Fig. 12 is superimposed on the serrate wave in x-axial and y-axial directions. The circular deflection and facial deflection can be combined, and furthermore, the beam can be deflected by a line, an ellipse, or the like.

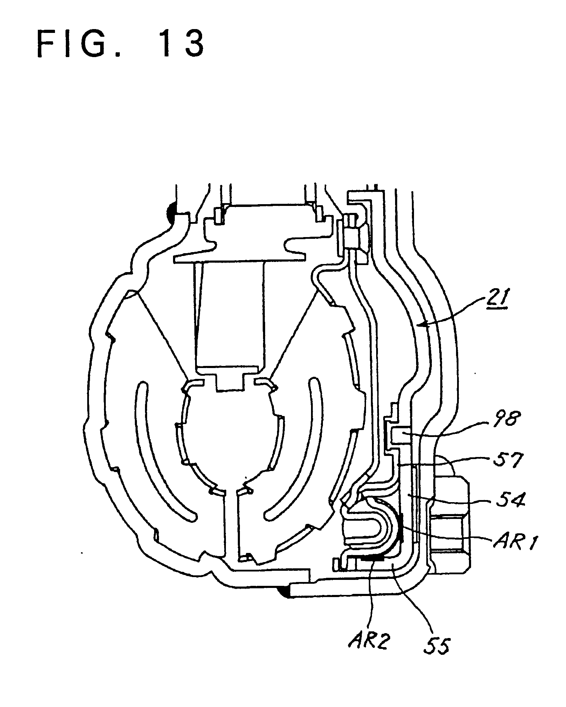

Referring to Fig. 13, a third embodiment of the invention is described. In Fig. 13, the numeral 21 represents a lockup clutch piston; the numeral 54 represents a second flat plate portion; the numeral 55 represents a second flange; the numeral 57 represents a drive plate; the numeral AR1, AR2 represent thermally treated regions. The numeral 98 is a rivet for rivet connection method known under the trademark TOX. The drive plate 57 is secured to the lockup clutch piston 21 by the rivet 98.

The foregoing description of a preferred embodiment of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not to be limited by the specification, but be defined by the claims set forth below.

## Claims

1. A torque converter (1) comprising:
a lockup clutch assembly (14) disposed between a font cover (16) and an output shaft;
a lockup clutch piston (21) made of steel operating the lockup clutch assembly (14);
a damper device (15) having a spring (33,34), disposed between the lockup clutch piston (21) and
the output shaft for absorbing change of transmission torque occurring in association with the operation of the lockup clutch assembly (14); **characterized by**
a thermally treated portion (AR1,AR2) hardened after locally melted and placed at a surface of the lockup clutch piston (21) in contact with the spring (33,34), wherein said local melting is done by heating said thermally treated portion (AR1, AR2) to a temperature, which is at least the melting temperature of the steel, for a period of time within the finishing time of said steel's austenitic transformation at a temperature immediately below the melting point thereof, wherein said period of time is immediately followed by cooling.

2. The torque converter (1) as set forth in claim 1, wherein the thermally treated portion (AR1, AR2) includes a first thermally treated region (AR1) placed on a flat portion of the lockup clutch piston (21) and a second thermally treated region (AR2) placed on a flange (55) of the lockup clutch piston (21).

3. The torque converter (1) as set forth in claim 1 or 2, wherein the lockup clutch piston (21) retains the spring (33,34) by directly contacting the spring with the thermally treated portion (AR1, AR2) located at the outmost circumference of the lockup clutch piston (21).

4. The torque converter (1) as set forth in claim 3, wherein a drive plate (57) of the damper device (15) is secured to the lockup clutch piston (21) by a rivet (58) made of a projected part of the lockup clutch piston (21) and plastically deformed and retains, with the thermally treated portion (AR1,AR2), the spring (33,34).

5. The torque converter (1) as set forth in any of claims 1 to 4, further comprising a friction member (20) located on a surface of the lockup clutch piston (21) in opposition to the front cover (16), wherein the thermally treated portion (AR1,AR2) is set in proximity of the back side of the surface on which the friction member (20) is formed.

6. The torque converter (1) as set forth in claim 1, wherein said area (AR1,AR2) is cooled within a time at the temperature starting martensitic transformation or below.

7. The torque converter (1) as set forth in any of claim 1 to 5, wherein said melting temperature is 1500°C or above and wherein said period of the time is within 0,05 seconds.

## Patentansprüche

1. Drehmomentwandler (1) mit:
einer zwischen einer vorderen Abdeckung (16) und einer Abtriebswelle angeordneten Überbrückungskupplung (14);
einem Überbrückungskupplungskolben (21) aus Stahl zum Betätigen der Überbrückungskupplung (14); und
einer Dämpfereinrichtung (15) mit einer Feder (33, 34), die zwischen dem Überbrückungskupplungskolben (21) und der Abtriebswelle angeordnet ist, um bei Betätigung der Überbrückungskupplung (14) auftretende Drehmomentänderungen zu absorbieren;
**gekennzeichnet durch** einen wärmebehandelten Bereich (AR1, AR2), der nach örtlichem Aufschmelzen gehärtet wird und auf einer in Kontakt mit der Feder (33, 34) befindlichen Oberfläche des Überbrückungskupplungskolbens (21) angeordnet ist;
wobei das örtliche Aufschmelzen **durch** Erhitzen des wärmebehandelten Bereichs (AR1, AR2) auf eine mindestens der Schmelztemperatur des Stahls entsprechende Temperatur über eine Zeitdauer hinweg erfolgt, die innerhalb der Zeit bis zur Beendigung der Austenitumwandlung des Stahls bei einer unmittelbar unter dem Schmelzpunkt desselben liegenden Temperatur entspricht, und wobei sofort im Anschluß an diese Zeitdauer das Abkühlen stattfindet.

2. Drehmomentwandler (1) nach Anspruch 1, wobei der wärmebehandelte Abschnitt (AR1, AR2) einen ersten wärmebehandelten Bereich (AR1) auf einem flachen Abschnitt des Überbrückungskupplungskolbens (21) und einen zweiten wärmebehandelten Bereich (AR2) auf einem Flansch (55) des Überbrückungskupplungskolbens (21) aufweist.

3. Drehmomentwandler (1) nach Anspruch 1 oder 2, wobei der Überbrückungskupplungskolben (21) die Feder (33, 34) hält, indem er diese in direkten Kontakt mit dem wärmebehandelten Bereich (AR1, AR2) am äußersten Umfang des Überbrückungskupplungskolbens (21) drückt.

4. Drehmomentwandler (1) nach Anspruch 3, wobei eine Mitnehmerscheibe (57) der Dämpfereinrichtung (15) mit dem Überbrückungskupplungskolben (21) über eine Niete (58) verbunden ist, die als vorstehender Teil des Überbrückungskupplungskolbens (21) ausgebildet sowie plastisch verformt ist und mit dem wärmebehandelten Bereich (AR1, AR2) die Feder (33, 34) hält.

5. Drehmomentwandler (1) nach Anspruch 1 bis 4, weiter mit einem Reibungselement (20) auf einer der vorderen Abdeckung (16) gegenüberliegenden Oberfläche des Überbrückungskupplungskolbens (21), wobei sich der wärmebehandelte Bereich (AR1, AR2) nahe der Rückseite der Oberfläche befindet, auf welcher das Reibungselement (20) angeordnet ist.

6. Drehmomentwandler (1) nach Anspruch 1, wobei der Bereich (AR1, AR2) innerhalb einer Zeit bei der Temperatur zu Beginn der Martensitumwandlung oder darunter erfolgt.

7. Drehmomentwandler (1) nach einem der Ansprüche 1 bis 5, wobei die Aufschmelztemperatur 1500°C oder darüber beträgt und die Zeitdauer innerhalb 0.05 Sekunden liegt.

## Revendications

1. Convertisseur de couple (1) comprenant :
un ensemble embrayage de verrouillage (14) placé entre un couvercle avant (16) et un arbre de sortie;
un piston d'embrayage de verrouillage (21) en acier actionnant l'ensemble embrayage de verrouillage (14);
un dispositif amortisseur (15) comportant un ressort (33, 34), placé entre le piston d'embrayage de verrouillage (21) et l'arbre de sortie pour absorber une variation de couple de transmission se produisant en association avec le fonctionnement de l'ensemble embrayage de verrouillage (14); **caractérisé par** une partie traitée thermiquement (AR1, AR2) durcie après avoir été fondue localement et placée au niveau d'une surface du piston d'embrayage de verrouillage (21) en contact avec le ressort (33, 34), dans lequel ladite fusion locale est faite en chauffant ladite partie traitée thermiquement (AR1, AR2) à une température qui est au moins la température de fusion de l'acier pendant un intervalle de temps compris dans le temps de finition de la transformation austénitique dudit acier à une température immédiatement en-dessous du point de fusion de celui-ci, ledit intervalle de temps étant immédiatement suivi d'un refroidissement.

2. Convertisseur de couple (1) selon la revendication 1, dans lequel la partie traitée thermiquement (AR1, AR2) comporte une première région traitée thermiquement (AR1) placée sur une partie plate du piston d'embrayage de verrouillage (21) et une seconde région traitée thermiquement (AR2) placée sur une bride (55) du piston d'embrayage de verrouillage (21).

3. Convertisseur de couple (1) selon la revendication 1 ou 2, dans lequel le piston d'embrayage de verrouillage (21) retient le ressort (33, 34) en touchant directement le ressort avec la partie traitée thermiquement (AR1, AR2) située au niveau de la circonférence la plus extérieure du piston d'embrayage de verrouillage (21).

4. Convertisseur de couple (1) selon la revendication 3, dans lequel une plaque d'entraînement (57) du dispositif amortisseur (15) est fixée au piston d'embrayage de verrouillage (21) par un rivet (58) constitué d'une partie saillante du piston d'embrayage de verrouillage (21) et déformée plastiquement et retient avec la partie traitée thermiquement (AR1, AR2), le ressort (33, 34).

5. Convertisseur de couple (1) selon l'une quelconque des revendications 1 à 4, comprenant en outre un élément de friction (20) situé sur une surface du piston d'embrayage de verrouillage (21) en opposition au couvercle avant (16), la partie traitée thermiquement (AR1, AR2) étant établie à proximité de la face arrière de la surface sur laquelle est formée l'élément de friction (20).

6. Convertisseur de couple (1) selon la revendication 1, dans lequel ladite zone (AR1, AR2) est refroidie pendant une durée à la température débutant la transformation martensitique ou en-dessous.

7. Convertisseur de couple (1) selon l'une quelconque des revendications 1 à 5, dans lequel ladite température de fusion est de 1500 °C ou au-dessus et dans lequel ledit intervalle de temps est inférieur ou égal à 0,05 secondes.
